# EUROPÄISCHE PATENTANMELDUNG

(11) **EP 1 241 856 A1**
(43) Veröffentlichungstag der Anmeldung: **18.09.2002**
(21) Anmeldenummer: 01106063.9
(22) Anmeldetag: 12.03.2001
(51) Int. Cl.: H04L 29/08, G06F 17/30

(54) **Verfahren und Vorrichtung zur drahtlosen Kommunikation**

(71) Anmelder: März, Christian, 84478 Waldkraiburg (DE)
(72) Erfinder: Die Erfindernennung liegt noch nicht vor
(74) Vertreter: Grünecker, Kinkeldey, Stockmair & Schwanhäusser Anwaltssozietät

(57) **Zusammenfassung**

Die Erfindung betrifft ein Verfahren zur drahtlosen Kommunikation zwischen einer ersten Vorrichtung und einer zweiten Vorrichtung, in welchem durch die erste Vorrichtung der Typ der zweiten Vorrichtung erfasst wird, und in der ersten Vorrichtung ein vom erfassten Typ der zweiten Vorrichtung abhängiger Prozess gesteuert wird. Insbesondere umfasst der Prozess eine Anzeige von Information in der zweiten Vorrichtung. Weiterhin betrifft die Erfindung eine Vorrichtung zur drahtlosen Kommunikation mit einer weiteren Vorrichtung, umfassend eine Einrichtung zur Erfassung des Typs der weiteren Vorrichtung, und eine Einrichtung zur Durchführung eines Prozesses in Abhängigkeit vom erfassten Typ der zweiten Vorrichtung. Die Erfindung betrifft darüber hinaus eine Vorrichtung zur drahtlosen Kommunikation mit einer derartigen Vorrichtung, umfassend eine Einrichtung zur Übermittlung des Typs der Vorrichtung zur Steuerung eines Prozesses in der weiteren Vorrichtung in Abhängigkeit vom Typ der Vorrichtung.

## Beschreibung

### Gebiet der Erfindung

Die Erfindung betrifft Verfahren und Vorrichtungen zur drahtlosen Kommunikation, insbesondere zur Kommunikation zwischen Computernetzen, beispielsweise dem Internet oder Intranet(s), mit Mobiltelefonen.

### Stand der Technik

In jüngster Zeit wurden Standards entwickelt, die eine drahtlose Kommunikation, beispielsweise zwischen Internet und Mobilfunknetzen, ermöglichen. Ein Beispiel für einen derartigen Standard stellt das sogenannte WAP (Wireless Application Protocol) dar. Durch dieses Protokoll ist es Nutzern möglich, von kabellosen Endgeräten über das Internet auf Computer (Server) und damit auf Anwendungen, die auf diesen abgelegt sind, zuzugreifen. Zur Kommunikation zwischen Mobiltelefon und Internet stehen sogenannte WAP-Browser zur Verfügung, die mobiltelefonseitig in Form von Hardware oder Software vorgesehen sind.

Da allerdings eine Vielzahl verschiedener Typen kabelloser Endgeräte in Verwendung sind, führt die Ausführung bestimmter Prozesse auf Computern, auf die über das Internet zugegeriffen wird, oftmals zu Fehlern. Besonders kritisch ist in diesem Zusammenhang die Darstellung von Infornation, beispielsweise auf Displays der Mobilfunkgeräte. Vielfach lässt sich deshalb bei der Darstellung von Information, insbesondere von graphischer Information, auf Moblitelefonen nur eine sehr schlechte Qualität realisieren, so dass die Akzeptanz der Benutzer, auf Anwendungen zuzugreifen, die eine graphische Darstellung benutzen, sehr gering ist. Als Beispiel solcher Anwendungen lassen sich Computerspiele, insbesondere Gewinnspiele, angeben.

Der vorliegenden Erfindung liegt demnach die Aufgabe zugrunde, Verfahren und Vorrichtungen zu schaffen, in welchen die Qualität der Durchführung eines Prozesses hinreichend hoch und darüber hinaus auch unabhängig von den verwendeten Geräten gewährleistet ist.

### Beschreibung der Erfindung

Diese Aufgabe wird gelöst durch ein Verfahren zur drahtlosen Kommunikation zwischen einer ersten Vorrichtung und einer zweiten Vorrichtung, in welchem durch die erste Vorrichtung der Typ der zweiten Vorrichtung erfasst wird, und in der ersten Vorrichtung ein vom erfassten Typ der zweiten Vorrichtung abhängiger und bezüglich des Typs der zweiten Vorrichtung optimierter Prozess gesteuert wird.

Durch dieses Verfahren kann der Typ der zweiten Vorrichtung ermittelt werden und schließlich ein für diesen Typ optimierter Prozess in der ersten Vorrichtung gestartet werden. Dies setzt selbstverständlich voraus, dass in der ersten Vorrichtung die für die verschiedenen Typen der zweiten Vorrichtung optimierten Prozesse durchgeführt werden können.

Somit kann durch dieses Verfahren gewährleistet werden, dass auf einen Prozess in der ersten Vorrichtung mittels einer zweiten Vorrichtung zugegriffen wird und die Qualität der Durchführung dieses Prozesses unabhängig vom Typ der zweiten Vorrichtung ist.

Dieses Verfahren, sowie die im folgenden beschriebenen Weiterbildungen des Verfahrens, können in der ersten und zweiten Vorrichtung in Form von Hardware und/oder Software vorgesehen werden. In diesem Fall müssen in der ersten Vorrichtung verschiedene Versionen der Hardware und/oder Software, die jeweils in Bezug auf den entsprechend Typ der zweiten Vorrichtung optimiert worden sind, vorliegen.

Entsprechend einer bevorzugten Weiterbildung des erfindungsgemäßen Verfahren kann der vom erfassten Typ der zweiten Vorrichtung abhängige Prozess einen Prozess zur Steuerung der Anzeige von Information in der zweiten Vorrichtung umfassen.

Dies ermöglicht eine qualitativ hochwertige Darstellung, insbesondere graphische Darstellung, von Prozessen auf der zweiten Vorrichtung, die auf der ersten Vorrichtung ablaufen. Die auf der ersten Vorrichtung ablaufenden Prozesse können zusätzlich zur Darstellung von Information auch noch andere Aufgaben ausführen.

Im Rahmen des WAP steht zur Darstellung von Information, insbesondere auch graphischer Information, WML (Wireless Markup Language) zur Verfügung, so dass sich diese Sprache zur Implementierung der vorliegenden Erfindung anbietet.

Zusätzlich oder alternativ kann der vom erfassten Typ der zweiten Vorrichtung abhängige Prozess auch einen Prozess zum Drucken von Information durch die zweite Vorrichtung umfassen.

Auf diese Weise lassen sich zwei besonders kritische Prozesse jeweils für verschiedentypige zweite Vorrichtungen optimieren und so eine vom Typ der zweiten Vorrichtung unabhängige Qualität des durch die erste Vorrichtung durchgeführten Prozesses sichern.

Neben diesen beiden bevorzugten Prozessen können im Rahmen der vorliegenden Erfindung selbstverständlich auch eine Vielzahl andersartiger Prozesse, für welche die Qualität der Kommunikation mit der zweiten Vorrichtung vom Typ der zweiten Vorrichtung abhängt, in der ersten Vorrichtung durchgeführt werden.

Gemäß einer besonders vorteilhaften Weiterbildung jedes der zuvor genannten Verfahren kann die erste Vorrichtung in Form einer Computereinrichtung und die zweite Vorrichtung in Form einer Mobiltelefoneinrichtung vorgesehen sein.

In dieser Weiterbildung lässt sich insbesondere das Problem bei bisher bekannten Mobiltelefoneinrichtungen, dass nämlich bestimmte Prozesse, wie die Darstelllung von graphischer Information in Abhängigkeit von dem Typ des verwendeten Mobiltelefons, sehr schlechte Ergebnisse liefern, lösen.

Insbesondere kann so eine graphische Darstellung von Information mit hoher Qualität und unabhängig vom verwendeten Typ des Mobiltelefons erzielt werden. Damit lässt sich für eine Vielzahl von Anwendungen eine hohe Akzeptant erzielen.

Entsprechend einer bevorzugten Weiterbildung der vorliegenden Erfindung kann in der Computereinrichtung ein interaktives Programm ablaufen und durch die Mobiltelefoneinrichtung eine Eingabe/Ausgabeeinrichtung zur Steuerung des interaktiven Programms realisiert werden. Hierdurch wird es möglich, mittels einer Mobiltelefoneinrichtung auf interaktive Anwendungen mit hoher und vom Gerätetyp unabhängiger Qualität auf Anwendungen, die auf einem Computer installiert sind, über das Internet oder ein Intranet zuzugreifen.

Vorteilhafter weise kann das interaktive Programm ein Computerspiel, insbesondere ein Gewinnspiel, sein. Hierdurch kann die Akzeptanz von durch ein Mobiltelefon spielbaren Computerspielen stark erhöht werden.

Zur Realisierung des oben beschriebenen Verfahrens sieht die Erfindung eine Vorrichtung zur drahtlosen Kommunikation mit einer weiteren Vorrichtung vor, umfassend eine Einrichtung zur Erfassung des Typs der weiteren Vorrichtung, und eine Einrichtung zur Durchführung eines Prozesses in Abhängigkeit vom erfassten Typ der zweiten Vorrichtung.

Durch die Einrichtung zur Erfassung des Typs der weiteren Vorrichtung lässt sich der Typ der weiteren Vorrichtung feststellen und so ein Prozess, der bezüglich des Typs der weiteren Vorrichtung optimiert ist, durchführen. Die Einrichtung zur Erfassung des Typs der weiteren Vorrichtung kann auf vielfältigste Weise ausgebildet sein. So kann sie beispielsweise ein Anforderungssignal an die weitere Vorrichtung ausgeben und schließlich ein Signal, das den Typ der weiteren Vorrichtung kennzeichnet und auf Anforderung der Vorrichtung von der weiteren Vorrichtung ausgegeben wird, empfangen. Anhand des empfangenen Signals kann schließlich der Typ der weiteren Vorrichtung festgestellt werden und der diesem Typ entsprechende Prozess durchgeführt werden.

Alternativ kann die Einrichtung zur Erfassung des Typs der weiteren Vorrichtung so ausgebildet sein, dass sie, sobald die Kommunikation von der weiteren Vorrichtung mit der Vorrichtung aufgebaut wird, ein im Rahmen dieses Kommunikationsaufbaus von der weiteren Vorrichtung ausgegebenes Signal aufnimmt und anhand dieses Signals den Typ der zweiten Vorrichtung ermittelt und dementsprechend einen bezüglich der zweiten Vorrichtung optimierten Prozess durchführt.

Signalausgabe und Signalaufnahme im obigen Sinn beinhaltet zum einen eine direkte Signalausgabe und Signalaufnahme, sowie eine Signalausgabe und Signalaufnahme im Rahmen der Kommunikation zwischen Mobiltelefon und Computer über Internet, also über die Kette:
Server <-> Netzwerkcomputer <-> Internet <-> Gateway <-> Knoten (GSN) <-> Sender/Empfänger <-> Mobiltelefon.

Vorteilhafter weise kann die zuvor beschriebene Vorrichtung in Form einer Computereinrichtung vorgesehen sein, und der Prozess kann eine Steuerung der Anzeige von Information, insbesondere auch graphischer Darstellung, in der weiteren Vorrichtung umfassen.

Zur weiteren Realisierung der oben beschriebenen Verfahren sieht die Erfindung eine Vorrichtung zur drahtlosen Kommunikation mit einer weiteren Vorrichtung vor, umfassend eine Einrichtung zur Übermittlung des Typs der Vorrichtung zur Steuerung eines Prozesses in der weiteren Vorrichtung in Abhängigkeit vom Typ der Vorrichtung.

Vorzugsweise ist diese Vorrichtung in Form einer Mobiltelefoneinrichtung vorgesehen ist.

Entsprechend der obigen Ausführungen umfasst ein System gemäß der vorliegenden Erfindung, insbesondere zur Durchführung der oben beschriebenen Verfahren, die beiden zuvor beschriebenen Vorrichtungen, also eine erste Vorrichtung, in welcher der Typ der zweiten Vorrichtung festgestellt wird und entsprechend des Typs der zweiten Vorrichtung ein bezüglich dieses Typs optimierter Prozess durchgeführt wird, sowie eine zweite Vorrichtung, die derart ausgebildet ist, dass sie der ersten Vorrichtung ihren Typ kommunizieren kann.

## Patentansprüche

1. Verfahren zur drahtlosen Kommunikation zwischen einer ersten Vorrichtung und einer zweiten Vorrichtung, in welchem
durch die erste Vorrichtung der Typ der zweiten Vorrichtung erfasst wird, und
in der ersten Vorrichtung ein vom erfassten Typ der zweiten Vorrichtung abhängiger Prozess gesteuert wird.

2. Verfahren nach Anspruch 1, in welchem der vom erfassten Typ der zweiten Vorrichtung abhängige Prozess einen Prozess zur Steuerung der Anzeige von Information in der zweiten Vorrichtung umfasst.

3. Verfahren nach Anspruch 1 oder 2, in welchem der vom erfassten Typ der zweiten Vorrichtung abhängige Prozess einen Prozess zum Drucken von Information durch die zweite Vorrichtung umfasst.

4. Verfahren nach einem der Ansprüche 1 bis 3, in welchem die erste Vorrichtung in Form einer Computereinrichtung und die zweite Vorrichtung in Form einer Mobiltelefoneinrichtung vorgesehen ist.

5. Verfahren nach Anspruch 4, in welchem in der Computereinrichtung ein interaktives Programm abläuft und durch die Mobiltelefoneinrichtung eine Eingabe/Ausgabeeinrichtung zur Steuerung des interaktiven Programms realisiert wird.

6. Verfahren nach Anspruch 5, in welchem das interaktive Programm ein Computerspiel, insbesondere ein Gewinnspiel, ist.

7. Vorrichtung zur drahtlosen Kommunikation mit einer weiteren Vorrichtung, umfassend:
eine Einrichtung zur Erfassung des Typs der weiteren Vorrichtung, und
eine Einrichtung zur Durchführung eines Prozesses in Abhängigkeit vom erfassten Typ der zweiten Vorrichtung.

8. Vorrichtung nach Anspruch 7, die in Form einer Computereinrichtung vorgesehen ist, und in welcher der Prozess eine Steuerung der Anzeige von Information in der weiteren Vorrichtung umfasst.

9. Vorrichtung zur drahtlosen Kommunikation mit einer weiteren Vorrichtung, umfassend eine Einrichtung zur Übermittlung des Typs der Vorrichtung zur Steuerung eines Prozesses in der weiteren Vorrichtung in Abhängigkeit vom Typ der Vorrichtung.

10. Vorrichtung nach Anspruch 9, die in Form einer Mobiltelefoneinrichtung vorgesehen ist.

11. System, insbesondere zur Durchführung des Verfahrens nach einem der Ansprüche 1 bis 6, mit einer Vorrichtung nach Anspruch 7 oder 8 und einer Vorrichtung nach Anspruch 9 oder 10.
